# EUROPÄISCHE PATENTSCHRIFT

(11) **EP 4 316 746 B1**
(45) Veröffentlichungstag und Bekanntmachung des Hinweises auf die Patenterteilung: **30.04.2025**
(21) Anmeldenummer: 22203863.0
(22) Anmeldetag: 26.10.2022
(51) Int. Cl.: B25J 5/00, B25F 5/00, B25J 11/00, B25J 15/04

(54) **BAUROBOTER MIT WECHSELSCHNITTSTELLE, TEILESYSTEM SOWIE VERFAHREN ZUR ANORDNUNG EINES TEILESYSTEMS AN DER WECHSELSCHNITTSTELLE**
CONSTRUCTION ROBOT WITH INTERCHANGEABLE INTERFACE, PARTS SYSTEM AND METHOD FOR ARRANGING A PARTS SYSTEM ON THE INTERCHANGEABLE INTERFACE
ROBOT DE CONSTRUCTION DOTÉ D'UNE INTERFACE INTERCHANGEABLE, SYSTÈME DE PIÈCES ET PROCÉDÉ D'AGENCEMENT D'UN SYSTÈME DE PIÈCES SUR L'INTERFACE INTERCHANGEABLE

(30) Priorität: 03.08.2022 EP 22188419
(43) Veröffentlichungstag der Anmeldung: 07.02.2024
(73) Patentinhaber: Hilti Aktiengesellschaft, 9494 Schaan (LI)
(72) Erfinder: Brugger, Peter, 6800 Feldkirch (AT); Nitzschner, Michael, 86156 Augsburg (DE); Britz, Rory, 82319 Starnberg (DE); Hurka, Florian, 86459 Margertshausen (DE); Koscheck, David, 86899 Landsberg (DE); Hartmann, Markus, 87665 Mauerstetten (DE); Fürfanger, Georg, 81373 München (DE); Schmid, Tobias, 86875 Emmenhausen (DE)
(74) Vertreter: Hilti Aktiengesellschaft Corporate Intellectual Property

(56) Entgegenhaltungen:
- EP-A1- 4 016 212
- EP-B1- 1 711 317
- DE-T2- 69 200 994
- DE-U1- 202014 105 941
- US-A1- 2010 067 981

## Beschreibung

Die Erfindung betrifft einen Bauroboter, insbesondere zur Ausführung von Hochbau-Bauarbeiten, umfassend einen Manipulator und eine am Manipulator befindliche Wechselschnittstelle, die zur lösbaren Anordnung eines Werkzeugs eingerichtet ist.

Um komplexe Bauaufgaben ausführen zu können, werden oftmals unterschiedliche Werkzeuge benötigt. Dies gilt umso mehr, wenn die Bauaufgaben mit Hilfe eines Bauroboters ausgeführt werden sollen. Um beispielsweise ein Bauelement an einer Decke anzuordnen, kann zunächst mit Hilfe eines Markierwerkzeugs an der Decke markiert werden, wo das Bauelement anzuordnen ist und / oder wo beispielsweise Bohrlöcher für Befestigungselemente zur Befestigung des Bauelements zu bohren sind. Anschließend können diese Bohrlöcher mit Hilfe eines Bohrwerkzeugs gebohrt werden. Danach können mit Hilfe eines Setzwerkzeugs die erforderlichen Befestigungselemente gesetzt werden. Abschließend kann mit Hilfe eines Montagewerkzeugs das Bauelement an den Befestigungselementen montiert werden.

Um unterschiedliche Elemente, beispielsweise Werkzeuge, am Bauroboter montieren und nutzen zu können, weist der Bauroboter eine Wechselschnittstelle auf. Die Wechselschnittstelle ist zur lösbaren Anordnung wenigstens eines Werkzeugs eingerichtet. Die zu montierenden Werkzeuge können einen zu der Wechselschnittstelle komplementär ausgebildeten Verbindungsabschnitt aufweisen. Solch ein Bauroboter mit einer Wechselschnittstelle zur lösbaren Anordnung eines Werkzeugs ist aus EP 4 016 212 A1 bekannt.

Aufgrund harscher Umgebungsbedingungen auf einer Baustelle, insbesondere einer Hochbau-Baustelle, unterliegen derartige Wechselschnittstellen häufig einem hohen Verschleiß. Staub, Schmutz oder dergleichen können eine ordnungsgemäße Montage des Elements an der Wechselschnittstelle ebenfalls behindern.

Es stellt ein besonderes Sicherheitsrisiko dar, wenn ein Element nicht ordnungsgemäß an der Wechselschnittstelle montiert ist. So ist beispielsweise denkbar, das sich das Element ungewollt löst und herabfallend Schäden verursacht. Im schlimmsten Fall können auch Personen zu Schaden kommen.

Aufgabe der vorliegenden Erfindung ist es daher, Mittel und Verfahren bereitzustellen, die eine sichere Nutzung unterschiedlicher Elemente durch einen Bauroboter ermöglichen.

Gelöst wird die Aufgabe durch einen Bauroboter gemäß dem Anspruch 1.

Somit ist es möglich, vor, während und / oder nach einer Montage und / oder einer Demontage eines Werkzeugs, an beziehungsweise von der Wechselschnittstelle die Wechselschnittstelle hinsichtlich etwaiger Sicherheitsrisiken zu kontrollieren.

Auch ermöglicht dies laufende Prüfungen der Wechselschnittstelle, sodass Ausfälle des Bauroboters vermieden werden können und der Bauroboter eine hohe Systemverfügbarkeit erreichen kann.

Beispielsweise kann vor der Montage des Elements die Wechselschnittstelle hinsichtlich Staub oder Schmutz kontrolliert werden. Im Falle der Detektion eines solchen Sicherheitsrisikos können beispielsweise ein Warnsignal abgesetzt, das Sicherheitsrisiko beseitigt, beispielsweise Schmutz entfernt, und / oder eine andere, auf das Sicherheitsrisiko hinweisende und / oder das Sicherheitsrisiko mindernde Maßnahme getroffen werden.

Unter "Werkzeug" können auch elektrische Werkzeugmaschinen wie beispielsweise Maschinen zum Bohren, Trennen, beispielsweise Sägen oder Winkelschleifer, Schleifen, Markieren, Messen oder dergleichen verstanden werden. Insbesondere können Werkzeuge zur Bearbeitung von Gestein, beispielsweise Beton, umfasst sein.

Die Wechselschnittstelle ist am Manipulator angeordnet. Je nach an der Wechselschnittstelle angeordnetem Werkzeug können somit mit Hilfe des Manipulators an unterschiedlichen Positionen und / oder in unterschiedlichen Lagen unterschiedliche Bauarbeiten ausgeführt werden.

Besonders vorteilhaft ist es, einen solchen Bauroboter auf Hochbau-Baustellen zur Ausführung von Bauarbeiten einzusetzen.

Während bei Tiefbau-Baustellen die Möglichkeit besteht, Sperrzonen einzurichten, die während der Ausführung einer Bauarbeit nicht von Personen betreten werden dürfen, besteht diese Möglichkeit bei Hochbau-Baustellen häufig nicht oder lediglich in nur sehr eingeschränktem Maße. Auch kommt häufig bei Hochbau-Baustellen eine größere Vielfalt verschiedener Elemente, insbesondere von Werkzeugen, zum Einsatz als bei Tiefbau-Baustellen. Wechsel von Elementen sind oftmals häufiger erforderlich. Die Wahrscheinlichkeit einer mangelhaften Kopplung von Elementen an der Wechselschnittstelle und damit die Notwendigkeit, solche Sicherheitsrisiken einzudämmen, können somit bei Hochbau-Baustellen gegenüber Tiefbau-Baustellen erhöht sein.

Der Bauroboter kann wenigstens ein Vorratsmagazin aufweisen, das eingerichtet ist, wenigstens ein Werkzeug zur Verwendung durch den Bauroboter bereit zu stellen.

Vorzugsweise kann das Vorratsmagazin eingerichtet sein, das Werkzeug zur Anordnung an der Wechselschnittstelle bereit zu stellen. Dazu kann das Vorratsmagazin derart am Bauroboter angeordnet sein, dass die Wechselschnittstelle, insbesondere mit Hilfe des Manipulators, einem im Vorratsmagazin aufgenommenes Werkzeug angenähert werden kann. Vorzugsweise kann das Vorratsmagazin mehrere Aufnahmestellen aufweisen. In den Aufnahmestellen können dann unterschiedliche, für eine Bauaufgabe benötigte Werkzeuge aufgenommen sein. Insbesondere nach Gebrauch eines Werkzeugs ist es auch denkbar, dass das nicht mehr benötigte Werkzeug in einer der Aufnahmestellen des Vorratsmagazins abgelegt wird und von der Wechselschnittstelle gelöst wird.

Die Prüfvorrichtung kann eine optische Prüfkomponente umfasst. Die optische Prüfkomponente kann eine Bildaufnahmeeinheit, beispielsweise eine Farbbild-, eine Schwarzweiß-Kamera und / oder eine 3D-Kamera, umfassen. Die optische Prüfkomponente kann eingerichtet sein, optische Daten der Wechselschnittstelle zu erfassen. Die optische Prüfkomponente kann an dem Manipulator und / oder an einer mobilen Plattform des Bauroboters angeordnet sein.

Die Prüfvorrichtung kann auch eine Lichtquelle umfassen. Somit können Aufnahmebedingungen während der Aufnahme der optischen Daten vereinheitlicht werden. Dies kann eine spätere Auswertung der optischen Daten erleichtern. Denkbar ist auch, dass die Lichtquelle eingerichtet ist, wenigstens ein Muster auf die Wechselschnittstelle zu projizieren. Somit können beispielsweise Streifenlichtbilder, aus denen sich Tiefeninformationen ableiten lassen, aufgenommen werden.

Denkbar ist auch, das als optische Prüfkomponente eine bereits vorhandene Bildaufnahmeeinheit mitbenutzt wird. So ist beispielsweise denkbar, dass der Bauroboter bereits am Manipulator eine Bildaufnahmeeinheit aufweist. Eine solche Bildaufnahmeeinheit kann dann als optische Prüfkomponente der Prüfvorrichtung dienen. Insbesondere in diesem Fall kann es vorteilhaft sein, wenn am Bauroboter eine Lichtlenkeinheit, beispielsweise ein Spiegel, angeordnet ist. Dann kann der Manipulator derart in Stellung gebracht werden, das die an ihm angeordnete Bildaufnahmeeinheit über den Spiegel die optischen Daten der, insbesondere ebenfalls am Manipulator angeordneten, Wechselschnittstelle aufnimmt. Durch eine solche mehrfache Verwendung derselben Bildaufnahmeeinheit können Herstellkosten des Bauroboters verringert werden. Außerdem kann die vom Manipulator zu bewegende Masse und damit die damit verbundene Trägheit gering gehalten werden.

Zur Auswertung der optischen Daten kann der Bauroboter eine Bildverarbeitungslogik aufweisen, die eingerichtet ist, die optischen Daten, insbesondere Bilddaten, von der optischen Prüfkomponente zu empfangen und wenigstens ein Qualitätsmerkmal der Wechselschnittstelle aus den optischen Daten zu ermitteln. Das Qualitätsmerkmal kann beispielsweise einer hinreichenden Freiheit von Staub, Schmutz und / oder Verschleißerscheinungen wie beispielsweise Bruchstellen oder Abriebstellen, entsprechen. Allgemein kann das Qualitätsmerkmal einer hinreichenden Konformität der optischen Daten mit früheren und / oder standardisierten optischen Daten der Wechselschnittstelle entsprechen. Mit anderen Worten kann das Qualitätsmerkmal eingerichtet sein zu indizieren, ob sich eventuelle Abweichungen der Wechselschnittstelle von einem Soll innerhalb eines definierten Rahmens befinden. Das Qualitätsmerkmal kann sich dabei auf die gesamte Wechselschnittstelle oder lediglich auf einen Teilbereich der Wechselschnittstelle beziehen.

Denkbar ist auch, dass die Bildverarbeitungslogik zumindest zum Teil auf einem entfernten Rechnersystem, insbesondere eines Cloud-basierten Rechnersystems, ausgebildet ist. Dann kann durch Sammlung optischer Daten mehrerer Bauroboter die Auswertung der optischen Daten laufend verbessert werden.

Der Bauroboter kann alternativ oder ergänzend auch eingerichtet sein, wenigstens ein Qualitätsmerkmal des Vorratsmagazins zu ermitteln. Dazu kann die optische Prüfkomponente auch eingerichtet sein, optische Daten vom Vorratsmagazin zu erfassen. Somit können Sicherheitsrisiken des Vorratsmagazins aufgrund von Staub, Schmutz, Verschleiß, inkorrekt in einer Aufnahmestelle aufgenommener Elemente oder dergleichen, zusätzlich detektierbar sein. Besonders bevorzugt kann vorgesehen sein, dieselbe Bildaufnahmeeinheit der Prüfkomponente zu nutzen.

Denkbar ist auch, dass die Prüfvorrichtung eine mechanische Prüfkomponente umfasst. Dies ermöglicht eine mechanische Prüfung unter Ausnutzung einer mechanischen Eigenschaft der Werkzeugschnittstelle, beispielsweise einer Kraft und / oder eines Drucks, insbesondere einer maximalen Haltekraft, einer Zugspannung und / oder eines Anpressdrucks, einer Dehnung, eines Abstandes oder dergleichen. Eine solche mechanische Prüfung kann alternativ oder ergänzend zu einer optischen Prüfung erfolgen. Besonders vorteilhaft kann dabei sein, dass eine solche Prüfung mit Hilfe der mechanischen Prüfkomponente andere Sicherheitsrisiken prüfen kann als es mit einer optischen Prüfung möglich ist.

Insbesondere ist denkbar, dass die mechanische Prüfkomponente eingerichtet ist, eine mechanische Widerstandskraft zu erzeugen, so dass ein im Vorratsmagazin aufgenommenes Element nur gegen die Widerstandskraft entnommen werden kann. Die Widerstandskraft kann einer mindestens erforderlichen Haltekraft entsprechen. Vorzugsweise kann die Widerstandskraft eine Gewichtskraft des im Vorratsmagazin aufgenommenen Elements übersteigen.

Bei unterschiedlichen Arten von im Vorratsmagazin aufzunehmenden Elementen kann die Widerstandskraft grösser als die größte Gewichtskraft aller zu erwartenden Arten aufzunehmender Elemente sein. Die Widerstandskraft kann insbesondere wenigstens das Zweifache der Gewichtskraft betragen.

Somit kann erreicht werden, dass das Element dem Vorratsmagazin erst entnommen werden kann, wenn die Widerstandskraft kompensiert oder überkompensiert werden kann. Erfolgt die Entnahme derart, dass das Element an die Wechselschnittstelle gekoppelt ist und dann die Wechselschnittstelle, beispielsweise mit Hilfe des Manipulators, vom Vorratsmagazin weg bewegt wird, kann somit sichergestellt werden, dass das Element an der Wechselschnittstelle mindestens mit einer maximalen Haltekraft angeordnet ist, die mindestens der Widerstandskraft entspricht.

Somit kann ein hinreichend fester Sitz des Elements an der Wechselschnittstelle mit Hilfe der mechanischen Prüfkomponente direkt geprüft werden. Der korrekte Sitz kann insbesondere sichergestellt werden, bevor das Element, beispielsweise ein Werkzeug, zur Ausführung einer Bauarbeit verwendet wird.

Die mechanische Prüfkomponente kann durch einen Teil des Vorratsmagazins, des Manipulators und / oder der mobilen Plattform ausgebildet sein.

Die Widerstandskraft kann magnetisch erzeugt werden. Dazu kann die Prüfkomponente einen Magnet aufweisen. Beispielsweise kann an einer Aufnahmestelle des Vorratsmagazins ein Magnet angeordnet sein. Das Element kann einen magnetisierbaren Bereich aufweisen. Während das Element in der Aufnahmestelle aufgenommen ist, kann somit der magnetisierbare Bereich mit einer der Widerstandskraft entsprechenden Magnetkraft vom Magneten angezogen werden. Um das Element der Aufnahmestelle zu entnehmen, muss somit die Magnetkraft und damit die Widerstandskraft, gegebenenfalls zuzüglich der Gewichtskraft des Elements, überwunden werden.

Alternativ oder ergänzend ist auch denkbar, dass die Prüfkomponente einen Rastmechanismus aufweist. Der Rastmechanismus kann eingerichtet sein, dass ein Entrasten durch Aufbringen einer Mindestlösekraft möglich ist. Dann kann die Mindestlösekraft die vorangehend genannte Widerstandskraft bilden.

Günstig ist dabei auch, dass die mechanische Prüfkomponente kein weiteres elektrisches Bauelement, insbesondere keinen zusätzlichen Sensor, keine Stromversorgung und keine Datenleitungen zur Eigenversorgung benötigt. Die Prüfung der Wechselschnittstelle kann besonders einfach selbsttätig während der und insbesondere auch durch eine erfolgreiche Entnahme des Elements erfolgen.

Alternativ oder ergänzend zu wenigstens einer der vorangehend beschriebenen Prüfkomponenten kann die Prüfvorrichtung eine elektrische Prüfkomponente umfassen. Insbesondere kann die elektrische Prüfkomponente eingerichtet sein, ein elektrisches Qualitätsmerkmal der Wechselschnittstelle zu erfassen. Ist die Wechselschnittstelle beispielsweise zur Übertragung elektrischer Energie und / oder von Daten eingerichtet, kann die elektrische Prüfkomponente eingerichtet sein, einen Stromfluss durch zur Übertragung dienende elektrische Leitungen zu prüfen. Auch kann ein elektrischer Widerstand oder dergleichen als Qualitätsmerkmal prüfbar sein.

Eine solche elektrische Prüfung kann problemlos auch mehrfach durchgeführt werden. Beispielsweise kann durch eine solche elektrische Prüfung laufend überwacht werden, insbesondere auch während der Ausführung einer Bauarbeit, ob ein an der Wechselschnittstelle angeordnetes Element mit der Wechselschnittstelle korrekt elektrisch verbunden ist. Dies kann dann indizieren, ob das Element insgesamt korrekt an der Wechselschnittstelle sitzt.

In den Rahmen der Erfindung fällt des Weiteren ein **Teilesystem,** umfassend ein Werkzeug, wobei das Werkzeug einen Verbindungsabschnitt aufweist, der zur lösbaren Verbindung mit der Wechselschnittstelle eines Bauroboters der vorangehend beschriebenen Art ausgebildet ist. Ein solches Teilesystem lässt sich, beispielsweise nach Prüfung der Wechselschnittstelle, an der Wechselschnittstelle lösbar anordnen. Aufgrund der Möglichkeit der Prüfung können dabei Sicherheitsrisiken, beispielsweise ein unbeabsichtigtes Lösen des Elements von der Wechselschnittstelle, reduziert oder vermieden werden.

Das Teilesystem und / oder der Bauroboter können eine Verbindungsabschnitt-Prüfvorrichtung aufweisen, die zur Qualitätsprüfung des Verbindungsabschnitts eingerichtet ist. Vorzugsweise umfasst die Verbindungsabschnitt-Prüfvorrichtung eine optische, eine elektrische und / oder eine mechanische Prüfkomponente, insbesondere nach einer der vorangehend beschriebenen Arten.

Dementsprechend fällt in den Rahmen der Erfindung auch **ein Bauroboter umfassend ein Teilesystem und eine Verbindungsabschnitt-Prüfvorrichtung,** die zur Qualitätsprüfung des Verbindungsabschnitts eingerichtet ist.

Mit Hilfe der Verbindungsabschnitt-Prüfvorrichtung kann ein Qualitätsmerkmal des Verbindungsabschnitts prüfbar sein. Je nach ermitteltem Qualitätsmerkmal können bei Bedarf Maßnahmen ausgelöst werden. Auch hierdurch lassen sich Sicherheitsrisiken bei der Nutzung des Elements am Bauroboter reduzieren.

Denkbar ist, dass sich die Verbindungsabschnitt-Prüfvorrichtung zumindest teilweise am Manipulator, an der mobilen Plattform und / oder am Vorratsmagazin befindet. Die Verbindungsabschnitt-Prüfvorrichtung kann der Prüfvorrichtung entsprechen, zumindest ein Teil der Prüfvorrichtung sein und / oder einen Teil der Prüfvorrichtung mitnutzen.

Des Weiteren betrifft die Erfindung auch ein **Verfahren** gemäß dem Anspruch 9.

Die Prüfung kann dabei vor, während und / oder nach dem Anordnen erfolgen. Denkbar sind insbesondere auch mehrfache Prüfungen. Je nach Ergebnis der Prüfung können dann Maßnahmen getroffen werden. Wird beispielsweise eine inkorrekte Montage des Elements an der Wechselschnittstelle detektiert, kann die Montage so lange wiederholt versucht werden, bis das Element korrekt montiert ist. Auch so lassen sich somit Sicherheitsrisiken reduzieren.

Das Verfahren kann vorsehen, dass wenigstens eine Prüfung mit Hilfe einer mechanischen Prüfkomponente und wenigstens eine Prüfung mit Hilfe einer optischen Prüfkomponente erfolgt, sodass unterschiedliche Arten von Sicherheitsrisiken und / oder vergleichbare Sicherheitsrisiken mit größerer Wahrscheinlichkeit identifiziert und anschließend gemindert werden können. Beispielsweise kann zunächst optisch ein Ausmaß von Verschleiß der Werkzeugschnittstelle geprüft werden; anschließend kann eine mechanische Prüfung des Sitzes des aufgenommenen Elements an der Werkzeugschnittstelle erfolgen.

Denkbar ist auch, dass eine Prüfung mit Hilfe einer optischen Prüfkomponente erfolgt, wobei die Wechselschnittstelle in wenigstens zwei verschiedene Stellungen relativ zur optischen Prüfkomponente gebracht wird. Bei einer anschließenden Auswertung aufgenommener optischer Daten kann dies eine Unterscheidung von Vordergrund- und Hintergrunddaten erleichtern. Allgemein kann es die Auswertung der optischen Daten unterstützen.

Das Verfahren kann auch umfassen, dass ein Qualitätsmerkmal des Vorratsmagazins, beispielsweise ein Indikator von Verschleiß, Abnutzung und / oder einem Vorhandensein oder Fehlen eines Werkzeugs und / oder Bauteils sein.

Denkbar ist insbesondere, vorzusehen, dass mit ein und derselben Bildaufnahmeeinheit die Wechselschnittstelle, ein Teilesystem und / oder das Vorratsmagazin geprüft werden.

Der Bauroboter kann zur Ausführung von Bauarbeiten auf einer Hochbau-Baustelle ausgebildet sein. Er kann zur Ausführung von Bauarbeiten an einer Decke, einer Wand und / oder einem Boden eingerichtet sein. Er kann zum Markieren, Bohren, Trennen, Meißeln, Schleifen und / oder Setzen eines Bauelements ausgebildet sein, insbesondere können entsprechende Werkzeuge an ihm lösbar anordenbar sein.

Der Bauroboter weist einen Manipulator auf. Der Bauroboter kann eine mobile Plattform aufweisen. Der Manipulator kann an der mobilen Plattform angeordnet sein.

Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Die mobile Plattform kann ein Räderfahrwerk und / oder ein Kettenfahrwerk umfassen. Die mobile Plattform kann wenigstens zwei Freiheitsgrade aufweisen. Der Bauroboter kann insgesamt wenigstens zehn Freiheitsgrade aufweisen.

Die Bildverarbeitungslogik kann als Rechnereinheit ausgebildet und / oder Teil einer Rechnereinheit sein. Die Rechnereinheit kann einen Prozessor, eine Speichereinheit und / oder einen auf dem Prozessor ausführbaren Programmcode aufweisen. Der Prozessor kann ein oder mehrere Unterprozessoren aufweisen. Der Programmcode kann eingerichtet sein, das beschriebene Verfahren auf dem Bauroboter auszuführen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können.

In der schematischen Zeichnung sind Ausführungsbeispiele der Erfindung dargestellt und in der nachfolgenden Beschreibung näher erläutert.

### Es zeigen:

- Fig. 1: einen Bauroboter in perspektivischer Ansicht;
- Fig. 2 und 3: Seitenansichten eines Manipulators mit einer Wechselschnittstelle, mit der ein Werkzeug aus einem Vorratsmagazin, das eine mechanische Prüfkomponente aufweist, entnommen werden soll;
- Fig. 4 und 5: Draufsichten auf einen Verbindungsabschnitt sowie auf eine Wechselschnittstelle, die beide jeweils Verschleiß aufweisen;
- Fig. 6 und 7: jeweils einen Manipulator, eine Wechselschnittstelle, ein Vorratsmagazin und eine Prüfvorrichtung in perspektivischer Darstellung; und
- Fig. 8: ein Verfahren.

In der nachfolgenden Beschreibung der Figuren werden zur Erleichterung des Verständnisses der Erfindung für gleiche oder sich funktional entsprechende Elemente jeweils die gleichen Bezugszeichen verwendet.

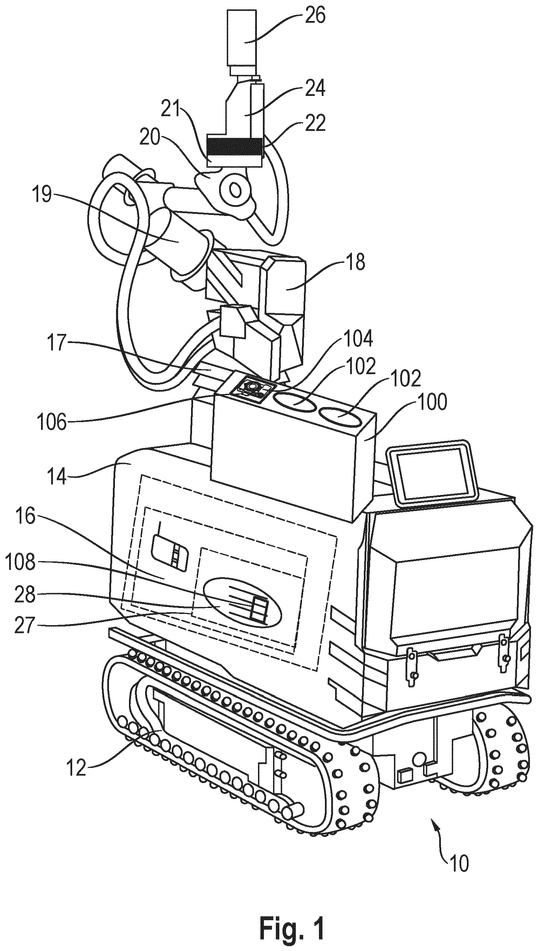

**Fig. 1** zeigt einen Bauroboter **10** mit einem als Kettenfahrwerk ausgebildeten Fahrwerk **12,** einem in einem Gehäuse **14** ausgebildeten Steuerraum **16** und einem oberseitig des Gehäuses 14 angeordneten Manipulator **18.** Der Manipulator umfasst eine Hubvorrichtung **17** zur vertikalen Verlagerung und einen multiaxial steuerbaren Arm **19.**

Am freien Ende des Arms 19 befindet sich ein Endeffektor **20** mit einer Wechselschnittstelle **21.**

An der Wechselschnittstelle 21 ist ein Werkzeug **24,** insbesondere eine Gesteinsbohrwerkzeugmaschine mit einer Staubabsaugungsvorrichtung **26,** angeordnet.

Um das Werkzeug 24 an der Wechselschnittstelle 21 lösbar anzuordnen, weist es einen Verbindungsabschnitt **22** auf. Die Wechselschnittstelle 21 ist zur lösbaren Verbindung des Verbindungsabschnitts 22 und damit auch des Werkzeugs 24 ausgebildet.

Der Manipulator 10 kann noch weitere Vorrichtungen, beispielsweise ein Prisma, ein Farbsprühgerät, einen Distanzmesser, eine Positions- und / oder Lage-Bestimmungslogik, eine Kamera und / oder dergleichen aufweisen, auch wenn diese aus Vereinfachungsgründen in Fig. 1 nicht dargestellt sind.

Der Bauroboter 10 ist zur Ausführung von Bauaufgaben, beispielsweise von Bohrarbeiten in Decken und Wänden, auf einer Baustelle, insbesondere auf einer Hochbau-Baustelle, ausgebildet.

Weiter weist der Bauroboter 10 ein Vorratsmagazin **100** auf. Das Vorratsmagazin 100 weist mehrere Ablageplätze **102** auf. An den Ablageplätzen 102 können Elemente wie beispielsweise Werkzeuge, beispielsweise das Werkzeug 24 und / oder für auszuführende Bauaufgaben benötigte Bauteile, abgelegt werden.

Neben dem Manipulator 18 zur Ausführung der dem Bauroboter 10 zugeordneten Bauaufgaben, weist der Bauroboter 10, insbesondere innerhalb des Gehäuses 14, eine im Steuerraum 16 angeordnete Rechnereinheit **27** auf. Die Rechnereinheit 27 umfasst eine Speichereinheit **28.**

Die Rechnereinheit 27 ist mit ausführbarem Programmcode ausgestattet. Der Programmcode kann abrufbar und ausführbar in der Speichereinheit 28 gespeichert sein. Er kann eingerichtet sein, den Manipulator 18 zu steuern, so dass eines der Elemente des Vorratsmagazins 100, insbesondere von einem der Ablageplätze 102 des Vorratsmagazins 100, aufgenommen und / oder dort abgelegt wird.

Weiter weist der Bauroboter 10, insbesondere am Vorratsmagazin 100, eine Prüfvorrichtung **104** auf. Die Prüfvorrichtung 104 ist zur Qualitätsprüfung der Wechselschnittstelle 21 eingerichtet. Dazu weist sie eine optische Prüfkomponente **106** auf. Die optische Prüfkomponente 106 umfasst eine Bildaufnahmeeinheit in Form einer Farbbildkamera. Sie kann beispielsweise vertikal nach oben ausgerichtet sein, sodass sie Aufnahmen der Wechselschnittstelle 21 aufnehmen kann, wenn der Endeffektor 20 in eine oberhalb der optischen Prüfkomponente **106** befindliche Position gebracht wird. Eine Bildverarbeitungslogik **108,** die eingerichtet ist, eine oder mehrere der Aufnahmen mit Soll-Darstellungen der Wechselschnittstelle zu vergleichen und daraus mögliche Fehler, wie beispielsweise Verschleißerscheinungen, Staub oder dergleichen, zu identifizieren, ist in der Rechnereinheit 27, insbesondere mit Hilfe des Programmcodes, realisiert. Die Bildverarbeitungslogik 108 ist Teil der Prüfvorrichtung 104.

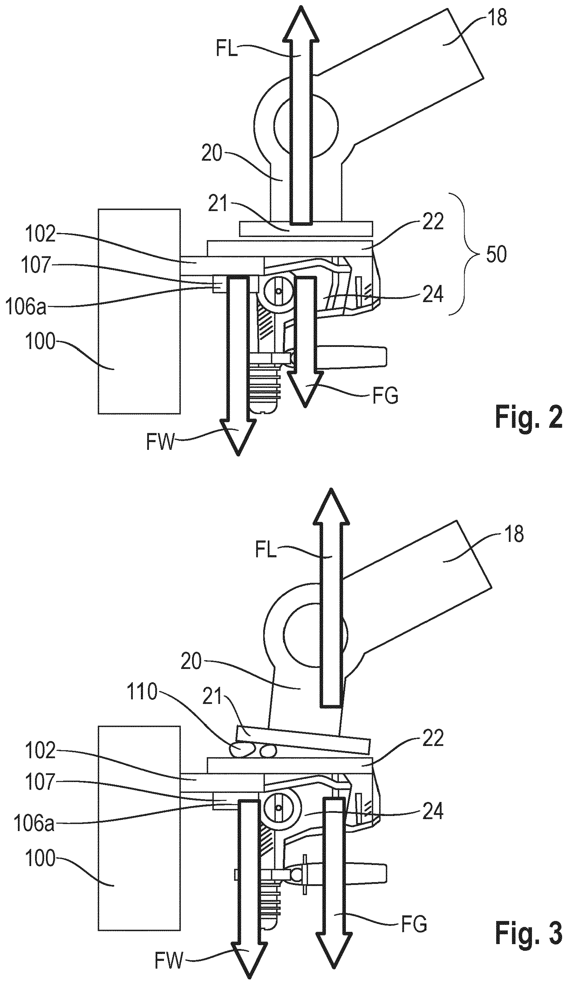

In den nachfolgend beschriebenen Fig. 2 bis Fig. 7 werden Komponenten von alternativen Ausführungsformen beschrieben. Soweit nicht anders beschrieben, können diese Komponenten alternativ zu den entsprechenden Komponenten des vorangehend beschriebenen Bauroboters 10 an diesem verwendet werden. Denkbar ist insbesondere, unterschiedliche Arten der nachfolgend beschriebenen alternativen Komponenten kombiniert mit einem Bauroboter 10 zu verwenden.

**Fig. 2 und 3** zeigen in schematischer Darstellung ein Vorratsmagazin 100 mit einem Ablageplatz 102.

Am Ablageplatz 102 ist ein Element, insbesondere ein Werkzeug 24, angeordnet.

Das Werkzeug 24 weist einen Verbindungsabschnitt 22 zur lösbaren Verbindung mit einer an einem Endeffektor 20 eines Manipulators 18 angeordneten Wechselschnittstelle 21 auf. Der Verbindungsabschnitt 22 weist eine magnetisierbare Platte, beispielsweise aus einem magnetisierbaren Stahl, auf.

Das Werkzeug 24, sowie der Verbindungsabschnitt 22 bilden ein Teilesystem 50

Am Vorratsmagazin 100 ist eine mechanische Prüfkomponente **106a** angeordnet. Die mechanische Prüfkomponente 106a weist einen Magneten **107** auf. Der Magnet 107 erzeugt eine, im in Fig. 2 bzw. Fig. 3 dargestellten Fall nach unten gerichtete, Widerstandskraft **FW,** mit der das Werkzeug 24 zusätzlich zu seiner Gewichtskraft **FG** in dem Ablageplatz 102 gehalten ist. Zum Aufnehmen des Werkzeugs 24 muss somit vom Manipulator 18 eine Lösekraft **FL** aufgebracht werden, die mindestens der Summe der Widerstandskraft FW und der Gewichtskraft FG entspricht und der Resultierenden dieser beiden Kräfte FW, FG entgegen gerichtet ist. Die Wechselschnittstelle 21 ist derart eingerichtet, dass bei ordnungsgemäßer Anordnung des Elements, also des Werkzeugs 24, an der Wechselschnittstelle 21 mindestens die erforderliche Lösekraft übertragbar ist, sodass bei einer ordnungsgemäßen Anordnung das Werkzeug 24 dem Ablageplatz 102 erfolgreich entnommen werden kann.

Wird somit der Endeffektor 20 vertikal nach oben bewegt, wobei mindestens die Lösekraft FL erzeugt wird, kann somit das Werkzeug 24 bzw. das Teilesystem 50, dem Ablageplatz 102 entnommen werden.

Fig. 3 zeigt eine zur Fig. 2 entsprechende Situation, jedoch mit dem Unterschied, dass die Wechselschnittstelle 21 durch Staub **110** verschmutzt ist. Das Werkzeug 24 kann somit nicht über seinen Verbindungsabschnitt 22 ordnungsgemäß an die Wechselschnittstelle 21 gekoppelt werden. Insbesondere kann nicht mehr die erforderliche Lösekraft FL über die Wechselschnittstelle 21 zum Verbindungsabschnitt 22 übertragen werden.

Wird somit der Endeffektor 20 vertikal nach oben bewegt, löst sich der Verbindungsabschnitt 22 von der Wechselschnittstelle 21. Das Werkzeug 24 bzw. das Teilesystem 50 kann somit nicht dem Ablageplatz 102 entnommen werden.

Das Werkzeug 24 verbleibt somit am Ablageplatz 102, womit Sicherheitsrisiken, beispielsweise durch unbeabsichtigtes Lösen des Verbindungsabschnitts 22 von der Wechselschnittstelle 21 während der Ausführung einer Bauarbeit, wiederum reduziert oder gar vermieden werden.

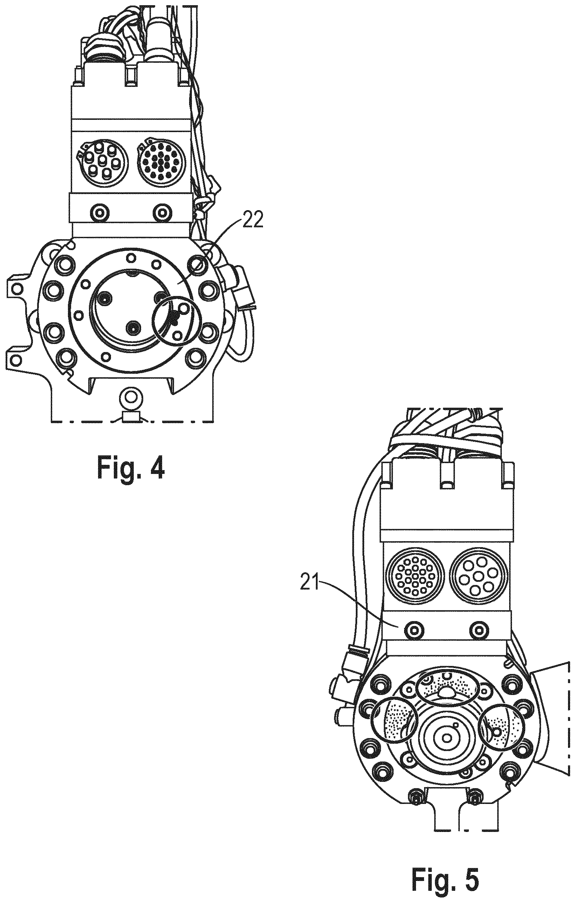

**Fig. 4 und 5** zeigen Draufsichten auf einen Verbindungsabschnitt 22 (Fig. 4) sowie auf eine Wechselschnittstelle 21 (Fig. 5), die beide jeweils Verschleiß aufweisen. Zur Verdeutlichung sind Verschleiß-behaftete Stellen in Fig. 4 und Fig. 5 mit Ellipsen hervorgehoben.

Derartiger Verschleiß kann mit Hilfe optischer Prüfkomponenten, zu denen Ausführungsbeispiele im Folgenden näher erläutert werden, identifiziert werden.

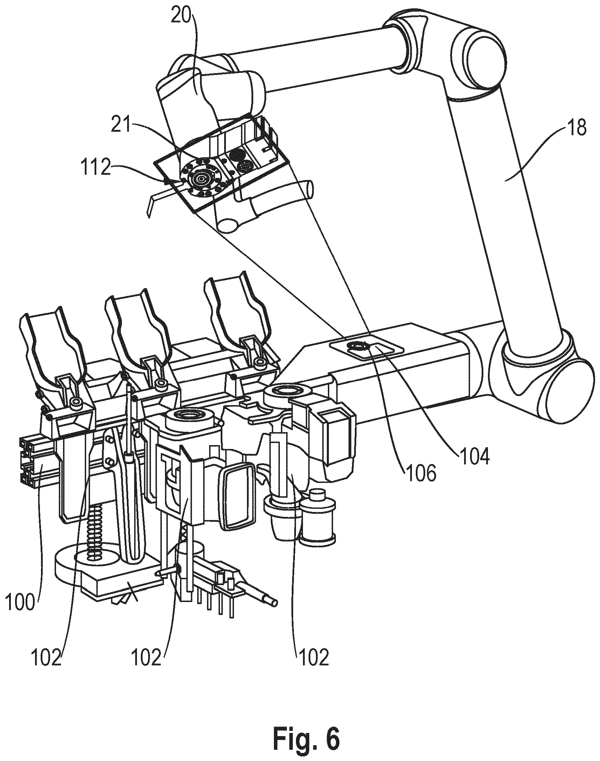

**Fig. 6** zeigt einen Manipulator 18 mit einem Endeffektor 20, an dem wiederum eine Wechselschnittstelle 21 ausgebildet ist. An einem Vorratsmagazin 100 mit mehreren Ablageplätzen 102 ist eine Prüfvorrichtung 104 angeordnet.

Die Prüfvorrichtung 104 weist eine optische Prüfkomponente 106 auf. Die optische Prüfkomponente 106 umfasst unter anderem eine Farbbildkamera.

Fig. 6 zeigt schematisch ein Sichtfeld **112** der optischen Prüfkomponente 106. In der in Fig. 6 gezeigten Stellung des Manipulators 18 kann somit die optische Prüfkomponente 106 Bildaufnahmen der Wechselschnittstelle 21 aufnehmen. Diese können in einer Bildverarbeitungslogik der Prüfvorrichtung 104, beispielsweise wie vorangehend beschrieben, analysiert werden, sodass etwaige Sicherheitsrisiken identifiziert werden können.

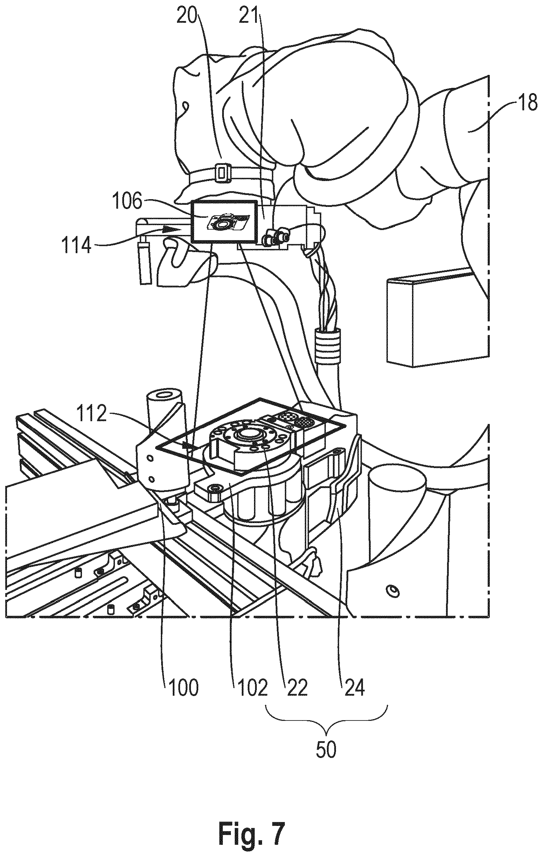

**Fig. 7** zeigt einen weiteren Manipulator 18 mit einem Endeffektor 20, an dem neben einer Wechselschnittstelle 21 eine weitere optische Prüfkomponente 106, die der vorangehend beschriebenen optischen Prüfkomponente 106 gemäß Fig. 6 entsprechen kann, angeordnet ist.

Die optische Prüfkomponente 106 umfasst eine Farbbildkamera.

In der in Fig. 7 gezeigten Stellung des Manipulators 18 umfasst das Sichtfeld 112 der optischen Prüfkomponente 106 einen Verbindungsabschnitt 22 eines an einem Ablageplatz 102 befindlichen Werkzeugs 24.

Eine Verbindungsabschnitt-Prüfvorrichtung **114** ist durch die optische Prüfkomponente 106 zusammen mit einer Rechnereinheit 27 (siehe Fig. 1) ausgebildet. Dazu ist die Rechnereinheit 27 eingerichtet, von der optischen Prüfkomponente 106 bereitgestellte Aufnahmen hinsichtlich Abweichungen des Verbindungsabschnitts 22 von einem Soll-Verbindungsabschnitt zu analysieren und dadurch etwaige Sicherheitsrisiken bei Verbindung des Verbindungsabschnitts 22 mit der Wechselschnittstelle 21 zu identifizieren.

Das Werkzeug 24 und sein Verbindungsabschnitt 22 bilden wiederum ein Teilesystem 50.

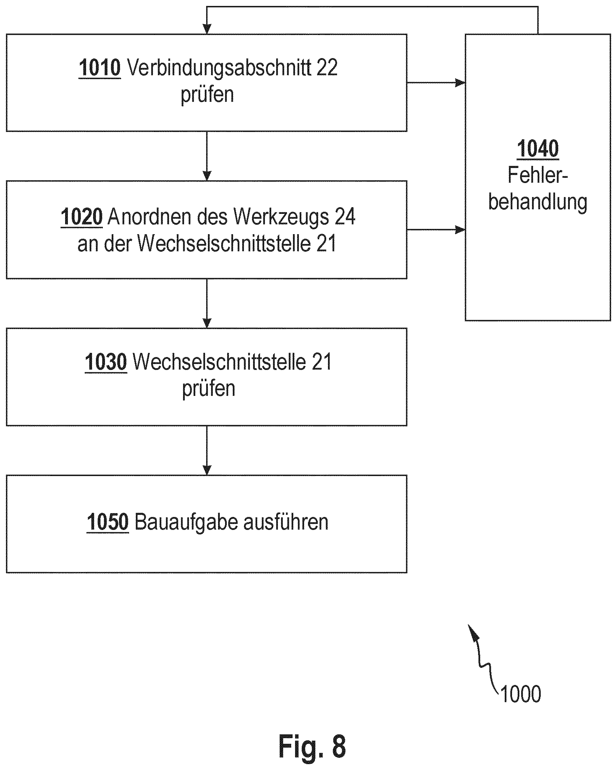

**Fig. 8** zeigt ein Verfahren **1000** zur Anordnung eines Teilesystems an einer Wechselschnittstelle eines Bauroboters der vorangehend beschriebenen Art.

Das Verfahren **1000** wird mit Bezug auf die vorangehend eingeführten Bezugszeichen für Komponenten des Bauroboters 10 näher erläutert. Beispielhaft soll der der Beschreibung zugrunde gelegte Bauroboter 10 eine Prüfvorrichtung 102 mit einer mechanischen Prüfkomponente 106a gemäß Fig. 2 und Fig. 3 sowie eine Verbindungsabschnitt-Prüfvorrichtung 114 mit einer optischen Prüfkomponente 106 gemäß Fig. 7 aufweisen.

In einer ersten Verfahrensphase **1010** wird der Verbindungsabschnitt 22 des Werkzeugs 24, damit auch des Teilesystems 50, hinsichtlich Abweichungen vom Soll geprüft. Insbesondere wird der Verbindungsabschnitt 22 auf eine Qualitätseigenschaft bezüglich des Vorhandenseins von Verschmutzungen wie beispielsweise Staub geprüft. Im Fehlerfall erfolgt eine Fehlerbehandlung **1040.**

Zunächst wird in einer Ankoppelphase **1020** die Wechselschnittstelle 21 zum Verbindungsabschnitt 22 des Teilesystems 50 mit Hilfe des Manipulators 18 bewegt. Die Wechselschnittstelle 21 wird an den Verbindungsabschnitt 22 angekoppelt und damit am Teilesystem 50, insbesondere am Werkzeug 24, angeordnet.

In einer anschließenden Prüfphase **1030** wird geprüft, ob das Werkzeug 24 ordnungsgemäß angekoppelt ist. Dazu wird der Manipulator 18 und damit die Wechselschnittstelle 21 vom Vorratsmagazin 100 wegbewegt. Währenddessen wird die Lösekraft FL erfasst.

Unterschreitet die Lösekraft FL einen in Abhängigkeit von der Widerstandskraft FW und der Art des Werkzeugs zu erwartende Mindestlösekraft, so indiziert dies eine nicht ordnungsgemäße Koppelung des Verbindungsabschnitts 22 bzw. des Werkzeugs 24 an die Wechselschnittstelle 21. Auch in diesem Fall erfolgt eine Fehlerbehandlung 1040.

Die Fehlerbehandlung 1040 kann mehrstufig aufgebaut sein. Insbesondere kann sie eine erste Fehlerbehandlung umfassen, bei der mit Hilfe einer Reinigungsvorrichtung, beispielsweise mit einer Bürstenwalze, zunächst versucht wird die Wechselschnittstelle 21 bzw. den Verbindungsabschnitt 22 zu reinigen.

Schlägt eine anschließende Prüfung erneut fehl, kann eine zweite Fehlerbehandlung vorgesehen sein, im Rahmen derer ein Hinweissignal an einen Benutzer des Bauroboters 10 gesandt wird, um so den Fehler manuell zu beheben.

Denkbar ist, beispielsweise zu Dokumentationszwecken, wenigstens eines der Ergebnisse der Prüfungen in einem Speicher zu speichern und / oder an eine weitere Rechnereinheit, beispielsweise an eine Cloud-basierte Rechnereinheit, zur dortigen Speicherung und / oder Weiterverarbeitung zu übertragen.

Denkbar ist auch, weitere Prüfungen durchzuführen. Beispielsweise kann eine elektrische Prüfung eines elektrischen Widerstandes erfolgen, um zu prüfen, ob eine oder mehrere elektrische Verbindungen zwischen der Wechselschnittstelle 21 und dem Verbindungsabschnitt 22 ordnungsgemäß hergestellt sind.

Sind die beiden Prüfungen im Rahmen der Phasen 1020, 1030 erfolgreich, so wird in einer Ausführungsphase **1050** eine gewünschte Bauaufgabe mit dem dann an der Wechselschnittstelle 21 befindlichen Werkzeug 24 ausgeführt.

Beispielsweise können ein oder mehrere Bohrlöcher mit dem als Gesteinsbohrwerkzeugmaschine ausgebildeten Werkzeug 24 gebohrt werden.

## Patentansprüche

1. **Bauroboter (10),** insbesondere zur Ausführung von Hochbau-Bauarbeiten, umfassend
- einen Manipulator (18),
- eine am Manipulator (18) befindliche Wechselschnittstelle (21), die zur lösbaren Anordnung wenigstens eines Werkzeugs (24) am Manipulator (18) eingerichtet ist, und
- eine Prüfvorrichtung (104), die zur Detektion von Verschleiß, Staub, Schmutz an der Wechselschnittstelle (21) und/oder des Werkzeugs (24) und/oder inkorrekten Sitz eines an der Wechselschnittstelle (21) angeordneten Werkzeugs (24) und zum Ausgeben eines Warnsignals bei Detektion eingerichtet ist.

2. Bauroboter nach dem vorhergehenden Anspruch, **dadurch gekennzeichnet, dass** der Bauroboter (10) wenigstens ein Vorratsmagazin (100) aufweist, das eingerichtet ist, wenigstens ein Werkzeug (24) zur Verwendung durch den Bauroboter (10) bereit zu stellen, wobei vorzugsweise das Vorratsmagazin (100) eingerichtet ist, das Element zur Anordnung an der Wechselschnittstelle (21) bereit zu stellen.

3. Bauroboter nach einem der vorhergehenden Ansprüche, **dadurch gekennzeichnet, dass** die Prüfvorrichtung (104) eine optische Prüfkomponente (106) umfasst.

4. Bauroboter nach einem der vorhergehenden Ansprüche, **dadurch gekennzeichnet, dass** der Bauroboter (10) eine Bildverarbeitungslogik aufweist, die eingerichtet ist, optische Daten, insbesondere Bilddaten, von der optischen Prüfkomponente (106) zu empfangen und wenigstens ein Qualitätsmerkmal der Wechselschnittstelle (21) aus den optischen Daten zu ermitteln.

5. Bauroboter nach einem der vorhergehenden Ansprüche, **dadurch gekennzeichnet, dass** die Prüfvorrichtung (104) eine mechanische Prüfkomponente (106a) umfasst.

6. Bauroboter nach einem der vorhergehenden Ansprüche, **dadurch gekennzeichnet, dass** die mechanische Prüfkomponente (106a) eingerichtet ist, eine mechanische Widerstandskraft (FW) zu erzeugen, so dass ein im Vorratsmagazin (100) aufgenommenes Element nur gegen die Widerstandskraft (FW) entnommen werden kann.

7. Bauroboter nach einem der vorhergehenden Ansprüche, **dadurch gekennzeichnet, dass** die Prüfvorrichtung (104) eine elektrische Prüfkomponente umfasst.

8. **Teilesystem** (50), umfassend ein
- Werkzeug (24), wobei das Werkzeug (24) einen Verbindungsabschnitt (22) aufweist, der zur lösbaren Verbindung mit der Wechselschnittstelle (21) eines Bauroboters (10) nach einem der vorhergehenden Ansprüche ausgebildet ist.

9. **Verfahren** (1000) zur Anordnung eines Teilesystems (50) nach dem vorhergehenden Anspruch an einer Wechselschnittstelle (21) eines Bauroboters (10) nach einem der Ansprüche 1 bis 7, mindestens umfassend die Schritte:
a) Detektion von Verschleiß, Staub, Schmutz an der Wechselschnittstelle (21) und/oder des Werkzeugs (24) und/oder inkorrekten Sitz eines an der Wechselschnittstelle (21) angeordneten Werkzeugs (24) und
b) Anordnen des Teilesystems (50) an der Wechselschnittstelle (21).

10. Verfahren nach dem vorhergehenden Anspruch, wobei wenigstens eine Prüfung mit Hilfe einer mechanischen Prüfkomponente (106a) und wenigstens eine Prüfung mit Hilfe einer optischen Prüfkomponente (106) erfolgt.

11. Verfahren nach einem der beiden vorhergehenden Ansprüche, **dadurch gekennzeichnet, dass** eine Prüfung mit Hilfe einer optischen Prüfkomponente (106) erfolgt, wobei die Wechselschnittstelle (21) in wenigstens zwei verschiedene Stellungen relativ zur optischen Prüfkomponente (106) bewegt wird.

## Claims

1. Construction robot (10), in particular for carrying out construction work in building construction, comprising
- a manipulator (18),
- a changeover interface (21) which is situated on the manipulator (18) and is configured for releasable arrangement of at least one tool (24) on the manipulator (18), and
- a testing device (104) which is configured for detection of wear, dust, dirt on the changeover interface (21) and/or the tool (24) and/or incorrect fit of a tool (24) arranged on the changeover interface (21) and for emitting a warning signal upon detection.

2. Construction robot according to the preceding claim, **characterized in that** the construction robot (10) has at least one storage magazine (100) which is configured to provide at least one tool (24) for use by the construction robot (10), wherein preferably the storage magazine (100) is configured to provide the element for arrangement on the changeover interface (21).

3. Construction robot according to either of the preceding claims, **characterized in that** the testing device (104) comprises an optical testing component (106).

4. Construction robot according to one of the preceding claims, **characterized in that** the construction robot (10) has image-processing logic which is configured to receive optical data, in particular image data, from the optical testing component (106) and to determine at least one quality feature of the changeover interface (21) from the optical data.

5. Construction robot according to one of the preceding claims, **characterized in that** the testing device (104) comprises a mechanical testing component (106a).

6. Construction robot according to one of the preceding claims, **characterized in that** the mechanical testing component (106a) is configured to generate a mechanical resistance force (FW) so that an element held in the storage magazine (100) can be removed only counter to the resistance force (FW).

7. Construction robot according to one of the preceding claims, **characterized in that** the testing device (104) comprises an electrical testing component.

8. Parts system (50) comprising
- a tool (24), wherein the tool (24) has a connecting portion (22) which is configured for releasable connection to the changeover interface (21) of a construction robot (10) according to one of the preceding claims.

9. Method (1000) for arranging a parts system (50) according to the preceding claim on a changeover interface (21) of a construction robot (10) according to one of Claims 1 to 7, at least comprising the steps of:
a) detecting wear, dust, dirt on the changeover interface (21) and/or the tool (24) and/or incorrect fit of a tool (24) arranged on the changeover interface (21),
and
b) arranging the parts system (50) on the changeover interface (21).

10. Method according to the preceding claim, wherein at least one test is carried out by means of a mechanical testing component (106a) and at least one test is carried out by means of an optical testing component (106).

11. Method according to either of the two preceding claims, **characterized in that** a test is carried out by means of an optical testing component (106), wherein the changeover interface (21) is moved into at least two different positions relative to the optical testing component (106).

## Revendications

1. Robot de construction (10), en particulier pour l'exécution de travaux de génie civil, comprenant
- un manipulateur (18),
- une interface interchangeable (21) se trouvant sur le manipulateur (18) et qui est conçue pour l'agencement amovible d'au moins un outil (24) sur le manipulateur (18), et
- un dispositif de contrôle (104) pour détecter de l'usure, de la poussière, de la saleté au niveau de l'interface interchangeable (21) et/ou de l'outil (24), et/ou un logement incorrect d'un outil (24) disposé au niveau de l'interface interchangeable (21) et pour émettre un signal d'alarme en cas de détection.

2. Robot de construction selon la revendication précédente, **caractérisé en ce que** le robot de construction (10) présente au moins un magasin de réserve (100) qui est conçu pour fournir au moins un outil (24) pour une utilisation par le robot de construction (10), le magasin de réserve (100) étant de préférence conçu pour fournir l'élément pour un agencement au niveau de l'interface interchangeable (21).

3. Robot de construction selon l'une quelconque des revendications précédentes, **caractérisé en ce que** le dispositif de contrôle (104) comprend un composant de contrôle optique (106).

4. Robot de construction selon l'une quelconque des revendications précédentes, **caractérisé en ce que** le robot de construction (10) présente une logique de traitement d'image qui est conçue pour recevoir des données optiques, en particulier des données d'image, du composant de contrôle optique (106), et pour déterminer au moins un critère de qualité de l'interface interchangeable (21) à partir des données optiques.

5. Robot de construction selon l'une quelconque des revendications précédentes, **caractérisé en ce que** le dispositif de contrôle (104) comprend un composant de contrôle mécanique (106a).

6. Robot de construction selon l'une quelconque des revendications précédentes, **caractérisé en ce que** le composant de contrôle mécanique (106a) est conçu pour produire une force de résistance mécanique (FW) de sorte qu'un élément reçu dans le magasin de réserve (100) ne peut être retiré que contre la force de résistance (FW).

7. Robot de construction selon l'une quelconque des revendications précédentes, **caractérisé en ce que** le dispositif de contrôle (104) comprend un composant de contrôle électrique.

8. Système de pièces (50), comprenant un
- outil (24), l'outil (24) présentant une partie de raccordement (22) qui est réalisée pour le raccordement amovible à l'interface interchangeable (21) d'un robot de construction (10) selon l'une quelconque des revendications précédentes.

9. Procédé (1000) permettant d'agencer un système de pièces (50) selon la revendication précédente au niveau d'une interface interchangeable (21) d'un robot de construction (10) selon l'une quelconque des revendications 1 à 7, comprenant au moins les étapes consistant à :
a) détecter de l'usure, de la poussière au niveau de l'interface interchangeable (21) et/ou de l'outil (24) et/ou un logement incorrect d'un outil (24) disposé au niveau de l'interface interchangeable (21),
et
b) agencer le système de pièces (50) au niveau de l'interface interchangeable (21).

10. Procédé selon la revendication précédente, dans lequel au moins un contrôle est effectué à l'aide d'un composant de contrôle mécanique (106a) et au moins un contrôle est effectué à l'aide d'un composant de contrôle optique (106).

11. Procédé selon l'une des deux revendications précédentes, **caractérisé en ce qu'**un contrôle est effectué à l'aide d'un composant de contrôle optique (106), l'interface interchangeable (21) étant déplacée dans au moins deux positions différentes par rapport au composant de contrôle optique (106).
